# EUROPÄISCHE PATENTSCHRIFT

(11) **EP 2 720 287 B1**
(45) Veröffentlichungstag und Bekanntmachung des Hinweises auf die Patenterteilung: **20.03.2019**
(21) Anmeldenummer: 12007022.2
(22) Anmeldetag: 10.10.2012
(51) Int. Cl.: H01M 2/10, H01M 2/34

(54) **Verpolungsschutz**
Incorrect polarity protection
Protection contre l'inversion des polarités

(43) Veröffentlichungstag der Anmeldung: 16.04.2014
(73) Patentinhaber: ABB Schweiz AG, 5400 Baden (CH)
(72) Erfinder: Staab, Ulrich, 63599 Biebergemünd/Kassel (DE); Overhoff, Dietmar, 63768 Hösbach (DE)
(74) Vertreter: Marks, Frank

(56) Entgegenhaltungen:
- DE-A1- 4 133 011
- GB-A- 2 089 104
- US-A1- 2010 304 188

## Beschreibung

Die Erfindung betrifft einen Verpolungsschutz für elektrische Geräte und Betriebsmittel, die aus wechselbaren zylindrischen Rundzellen energieversorgt sind.

Zylindrische Rundzellen, handelsüblich als sogenannte Monozellen oder D-Zellen, bestehen aus einem becherförmigen, rotationssymmetrischen und im wesentlichen zylindrischen Gehäuse, welches den Minuspol der Zelle bildet, und einer zentralen, sich entlang der Symmetrieachse des bescherförmigen Gehäuses erstreckenden Elektrode, die den Pluspol der Zelle bildet. Derartige Rundzellen sind als Primärzellen, also nichtwiederaufladbare Elemente, und Sekundärzellen, also wiederaufladbare Elemente, gebräuchlich und handelsüblich.

Elektrische Geräte und Betriebsmittel, die aus wechselbaren zylindrischen Rundzellen energieversorgt sind, weisen Aufnahmemittel für diese Rundzellen auf, bei denen die Abgriffe zur elektrischen Kontaktierung des Pluspols und des Minuspols der Rundzelle auf der Symmetrieachse des becherförmigen Gehäuses gegenüberliegend angeordnet sind. Die Aufnahmemittel weisen Markierungen auf, an welcher Stelle der Pluspol und der Minuspol der Rundzelle beim Einlegen derselben anzuordnen ist.

Diese Anordnung der Kontaktelemente ist mit dem Nachteil behaftet, dass auch dann eine elektrische Verbindung zwischen beiden Polen der Rundzelle und den jeweils anliegenden Kontaktelementen des Aufnahmemittels hergestellt wird, wenn die Rundzelle versehentlich entgegen den Markierungen eingelegt wird. In diesem Fehlerfall sind der Pluspol der Rundzelle mit dem Minusanschlus des Geräts und der Minuspol der Rundzelle mit dem Plusanschluss des Geräts verbunden, was zwangsläufig zu Schäden in dem elektrischen Gerät führt.

Um elektrische Geräte und Betriebsmittel vor Schäden durch verpolt eingelegte Rundzellen zu schützen, sind technische Mittel zum Verpolungsschutz einschlägig bekannt und in der freien Enzyklopädie Wikipedia unter der URL http://de.wikipedia.org/wiki/Verpolungsschutz zusammengefasst.

Darüber hinaus ist aus der DE 41 33 011 A1 eine Kontaktanordnung in einem Batteriefach für eine Stabbatterie mit einem Ringpoll und einem vorstehenden Pol bekannt, bei der ein Vorsprung im Batteriefach die Verpolung der Batterie verhindert.

Den bekannten Maßnahmen lassen sich in zwei Gruppen einteilen. Eine Gruppe von Maßnahmen basiert auf mindestens einer im Strompfad zwischen der Rundzelle und dem Verbraucher angeordnete Diode, der sogenannten Verpolschutzdiode, die nur bei korrekter Polarisierung der Rundzelle leitend ist und sonst den Stromfluss sperrt. Diese Gruppe von Maßnahmen ist mit dem Nachteil behaftet, dass über der mindestens einen Diode eine Spannung abfällt, die bei batteriegespeisten elektrischen Geräte und Betriebsmittel die effektive Versorgungsspannung gegenüber der Zellenspannung nachteiligerweise mindert und darüber hinaus durch eine Verlustleistung gekennzeichnet ist.

Eine weitere Gruppe von Maßnahmen basiert auf einem niederohmigen Schalter im Strompfad zwischen der Rundzelle und dem Verbraucher, dessen Betätigung durch weitere Bauelemente besorgt wird. Diese Gruppe von Maßnahmen ist durch einen hohen Aufwand nur für den Verpolungsschutz gekennzeichnet.

Der Erfindung liegt daher die Aufgabe zugrunde, einen einfachen und sicheren Verpolungsschutz anzugeben, bei dem ein Spannungsabfall über seinen Mitteln vermieden wird.

Erfindungsgemäß wird diese Aufgabe mit den Mitteln des Patentanspruchs 1 gelöst. Vorteilhafte Ausgestaltungen der Erfindung sind in den rückbezogenen Ansprüchen angegeben.

Die Erfindung geht aus von einem elektrischen Gerät oder Betriebsmittel, das aus wechselbaren zylindrischen Rundzellen energieversorgt ist, wobei die Rundzelle aus einem becherförmigen, rotationssymmetrischen und im wesentlichen zylindrischen Gehäuse, das als erste Elektrode ausgebildet ist, besteht und mit einer zentralen, sich entlang der Symmetrieachse des becherförmigen Gehäuses erstreckenden zweiten Elektrode ausgerüstet ist, und Aufnahmemittel für die Rundzelle mit einer ersten Kontaktstelle für die erste Elektrode der Rundzelle und einer zweiten Kontaktstelle für die zweite Elektrode der Rundzelle aufweist.

Erfindungsgemäß ist die erste Kontaktstelle auf einer kreisringförmigen Kontaktfäche der erste Elektrode angeordnet. Die zweite Kontaktstelle ist auf einer kreisscheibenförmigen Kontaktfläche der zweite Elektrode angeordnet. Die kreisringförmige Kontaktfäche und die kreisscheibenförmige Kontaktfläche sind koaxial zueinander beabstandet entlang der Symmetrieachse des becherförmigen Gehäuses angeordnet.

Infolge der koaxialen Beabstandung der beiden Kontaktflächen und der Anordnung der beiden Kontaktstellen auf jeweils einer der beiden lokal begrenzten Kontaktflächen ist die Zuordnung von Plus- und Minuspol der Rundzelle zum Plus- und Minusanschluss im Aufnahmemittel für die Rundzelle in jedem Falle eindeutig. Bei einer korrekt eingelegten Rundzelle ist deren Pluspol mit dem Plusanschluss des Aufnahmemittels und deren Minuspol mit dem Minusanschluss des Aufnahmemittels verbunden. Hingegen ist bei einer verpolt eingelegten Rundzelle zwar deren Minuspol mit dem Plusanschluss des Aufnahmemittels verbunden aber der zentrale Pluspol der Rundzelle von dem koaxialen Minusanschluss des Aufnahmemittels sicher getrennt. Folglich ist die verpolt eingelegte Rundzelle plusseitig isoliert. Damit werden elektrische Geräte und Betriebsmittel vor Schäden durch verpolt eingelegte Rundzellen sicher geschützt.

Vorteilhafterweise ist der erfindungsgemäße Verpolungsschutz durch den vollständigen Verzicht auf elektronische Schaltelemente verlustfrei. Damit steht die gesamte Kapazität der Rundzelle zur Stromversorgung des elektrischen Geräts oder Betriebsmittels zur Verfügung.

Der erfindungsgemäße Verpolungsschutz verzichtet auch auf andere, insbesondere nichtelektronische Mittel, so dass die Implementierung der Erfindung keinen Zusatzaufwand mit sich bringt. Der erfindungsgemäße Erfolg stellt sich vielmehr zwangsläufig durch die besondere Anordnung der ohnehin vorhandenen und benötigten Mittel ein.

Die Erfindung wird nachstehend anhand eines Ausführungsbeispiels näher erläutert. Die dazu erforderlichen Zeichnungen zeigen:
- Figur 1: eine teilweise geschnittene Darstellung einer Rundzelle,
- Figur 2: eine Prinzipdarstellung der Kontaktierung bei korrekter Zellenlage
- Figur 3: eine Prinzipdarstellung der Kontaktierung bei verpolter Zellenlage

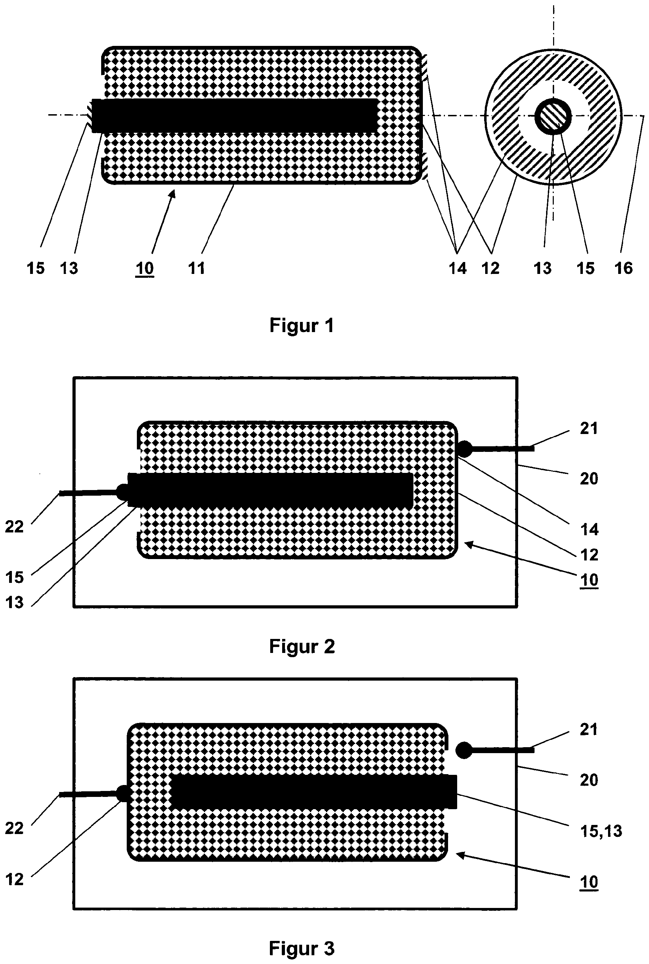

In der Figur 1 ist eine Rundzelle **10** mit einem becherförmigen, rotationssymmetrischen und im wesentlichen zylindrischen Gehäuse **11** gezeigt, welches die erste, den Minuspols der Rundzelle **10** bildenden Elektrode **12** ist und einer zentralen, sich entlang der Symmetrieachse **16** des bescherförmigen Gehäuses **11** erstreckenden zweiten Elektrode **13,** die den Pluspol der Rundzelle **10** bildet.

Die erste Elektrode **12** weist eine kreisringförmigen Kontaktfäche **14** auf, deren Lage in der radialen Darstellung der Rundzelle **10** als schräg steigend gestreifte Fläche und in der axialen Darstellung der Rundzelle **10** als schräg steigend gestreifte Erhebung, welche als solche nicht vorhanden ist, markiert ist.

Die zweite Elektrode **13** weist eine kreisscheibenförmigen Kontaktfäche **15** auf, deren Lage in der radialen Darstellung der Rundzelle **10** als schräg fallend gestreifte Fläche und in der axialen Darstellung der Rundzelle **10** als schräg fallend gestreifte Erhebung, welche als solche nicht vorhanden ist, markiert ist.

Die kreisringförmige Kontaktfäche **14** und die kreisscheibenförmige Kontaktfläche **15** sind koaxial zueinander beabstandet entlang der Symmetrieachse **16** des becherförmigen Gehäuses **11** angeordnet. Damit sind die Kontaktfächen **14** und **15** selbst dann berührungs- und überlappungsfrei, wenn sie in derselben Ebene liegen.

Unter Verwendung gleicher Bezugszeichen für gleiche Mittel ist in der Figur 2 ein Aufnahmemittel **20** mit einer ersten Kontaktstelle **21** und einer zweiten Kontaktstelle **22** gezeigt. Das Aufnahmemittel **20** dient neben der elektrischen Kontaktierung der Rundzelle **10** auch deren mechanischen Lagefixierung in dem elektrischen Gerät.

Die erste Kontaktstelle **21** ist im Bereich der kreisringförmigen Kontaktfäche **14** angeordnet, während die zweite Kontaktstelle **22** im Bereich der kreisscheibenförmigen Kontaktfäche **15** der korrekt eingelegten Rundzelle **10** angeordnet ist. Somit ist die erste Kontaktstelle **21** des Aufnahmemittels **20** mit der erste Elektrode **12** der korrekt eingelegten Rundzelle **10** verbunden. Die zweite Kontaktstelle **22** ist mit der zweiten Elektrode **13** der korrekt eingelegten Rundzelle **10** verbunden. Die Rundzelle **10** ist polaritätsrichtig mit dem elektrischen Gerät verbunden.

Unter Verwendung gleicher Bezugszeichen für gleiche Mittel ist in der Figur 3 ein Aufnahmemittel **20** mit einer ersten Kontaktstelle **21** und einer zweiten Kontaktstelle **22** gezeigt, in das die Rundzelle **10** verpolt eingelegt ist. In diesem Fehlerfall ist die zweite Kontaktstelle **22** außerhalb der kreisringförmigen Kontaktfäche **14** mit der ersten Elektrode **12** verbunden. Die Lage der ersten Kontaktstelle **21** befindet sich jedoch außerhalb der kreisscheibenförmigen Kontaktfäche **15** der zweiten Elektrode **13** der verpolt eingelegten Rundzelle **10**. Somit ist die verpolt eingelegte Rundzelle **10** nicht in den Stromkreis des elektrischen Geräts eingebunden.

Während in den Figuren 2 und 3 die Kontaktstellen **21** und **22** an gegenüberliegenden Seiten der Rundzelle **10** angeordnet sind, kann in besonderer Ausgestaltung der Erfindung vorgesehen sein, die Kontaktstellen **21** und **22** auf derselben Seite der Rundzelle **10** anzuordnen. Die koaxiale Lage der kreisringförmigen Kontaktfäche **14** zu der kreisscheibenförmigen Kontaktfläche **15** und die darauf gerichteten Kontaktstellen **21** und **22** bewirken eine elektrische Verbindung der korrekt eingelegten Rundzelle **10** und vehindern die polaritätsfalsche Verbindung der verpolt eingelegten Rundzelle **10.**

In weiteren Ausgestaltungen der Erfindung kann jede der Kontaktstellen **21** und **22** in beliebiger Kombination punktförmig, linienförmig oder flächig mit der jeweiligen Kontaktfäche **14** oder **15** verbunden sein. Eine punktförmige Verbindung der Kontaktstellen **21** und **22** mit der jeweiligen Kontaktfäche **14** oder **15** kann durch eine im Wesentlichen kegelförmigen Prägung einer bandförmigen Kontaktfahne gebildet sein. Eine linienförmige Verbindung der Kontaktstellen **21** und **22** mit der jeweiligen Kontaktfäche **14** oder **15** kann durch eine Abkantung einer bandförmigen Kontaktfahne gebildet sein. Bei einer flächigen Verbindung der Kontaktstellen **21** und **22** mit der jeweiligen Kontaktfäche **14** oder **15** liegt die Kontaktfahne der Kontaktstellen **21** und **22** unmittelbar auf der jeweiligen Kontaktfäche **14** oder **15** auf.

### Bezugszeichenliste

- 10: Rundzelle
- 11: Gehäuse
- 12, 13: Elektrode
- 14, 15: Kontaktfäche
- 16: Symmetrieachse
- 20: Aufnahmemittel
- 21, 22: Kontaktstelle

## Patentansprüche

1. Verpolungsschutz für elektrische Geräte und Betriebsmittel, die aus wechselbaren zylindrischen Rundzellen (10) energieversorgt sind, wobei die Rundzelle (10) aus einem becherförmigen, rotationssymmetrischen und im wesentlichen zylindrischen Gehäuse (11), das als erste Elektrode (12) ausgebildet ist, besteht und mit einer zentralen, sich entlang der Symmetrieachse des becherförmigen Gehäuses (11) erstreckenden zweiten Elektrode (13) ausgerüstet ist, und mit Aufnahmemitteln (20) für die Rundzelle mit einer ersten Kontaktstelle (21) für die erste Elektrode (12) der Rundzelle (10) und einer zweiten Kontaktstelle (22) für die zweite Elektrode (13) der Rundzelle (10),
**dadurch gekennzeichnet,**
- **dass** die erste Kontaktstelle (21) auf einer kreisringförmigen Kontaktfäche (14) der erste Elektrode (12) angeordnet ist,
- **dass** die zweite Kontaktstelle (22) auf einer kreisscheibenförmigen Kontaktfläche (15) der zweite Elektrode (13) angeordnet ist,
- **dass** die kreisringförmige Kontaktfäche (14) und die kreisscheibenförmige Kontaktfläche (15) koaxial zueinander beabstandet entlang der Symmetrieachse des becherförmigen Gehäuses (11) angeordnet sind und
- **dass** die erste Kontaktstelle (21) und die zweite Kontaktstelle (22) auf derselben Seite der Rundzelle (10) angeordnet sind.

2. Verpolungsschutz nach Anspruch 1
**dadurch gekennzeichnet,**
**dass** die erste Kontaktstelle (21) punktförmig auf der kreisringförmigen Kontaktfäche (14) angeordnet ist.

3. Verpolungsschutz nach Anspruch 1
**dadurch gekennzeichnet,**
**dass** die erste Kontaktstelle (21) linienförmig auf der kreisringförmigen Kontaktfäche (14) angeordnet ist.

4. Verpolungsschutz nach Anspruch 1
**dadurch gekennzeichnet,**
**dass** die erste Kontaktstelle (21) flächenförmig auf der kreisringförmigen Kontaktfäche (14) angeordnet ist.

5. Verpolungsschutz nach einem der vorstehenden Ansprüche
**dadurch gekennzeichnet,**
**dass** die zweite Kontaktstelle (22) punktförmig auf der kreisscheibenförmigen Kontaktfäche (15) angeordnet ist.

6. Verpolungsschutz nach einem der Ansprüche 1 bis 4
**dadurch gekennzeichnet,**
**dass** die zweite Kontaktstelle (22) linienförmig auf der kreisscheibenförmigen Kontaktfäche (15) angeordnet ist.

7. Verpolungsschutz nach einem der Ansprüche 1 bis 4
**dadurch gekennzeichnet,**
**dass** die zweite Kontaktstelle (22) flächenförmig auf der kreisscheibenförmigen Kontaktfäche (15) angeordnet ist.

## Claims

1. Polarity-reversal protection means for electrical devices and operating equipment which are supplied with energy from exchangeable cylindrical round cells (10), wherein the round cell (10) consists of a cup-like, rotationally symmetrical and substantially cylindrical housing (11), which is in the form of a first electrode (12), and is equipped with a central second electrode (13) which extends along the axis of symmetry of the cup-like housing (11), and having receiving means (20) for the round cell with a first contact point (21) for the first electrode (12) of the round cell (10) and a second contact point (22) for the second electrode (13) of the round cell (10),
**characterized**
- **in that** the first contact point (21) is arranged on a circular ring-like contact area (14) of the first electrode (12),
- **in that** the second contact point (22) is arranged on a circular disc-like contact area (15) of the second electrode (13),
- **in that** the circular ring-like contact area (14) and the circular disc-like contact area (15) are arranged coaxially in relation to one another at a distance from one another along the axis of symmetry of the cup-like housing (11), and
- **in that** the first contact point (21) and the second contact point (22) are arranged on the same side of the round cell (10).

2. Polarity-reversal protection means according to Claim 1,
**characterized**
**in that** the first contact point (21) is arranged on the circular ring-like contact area (14) in the form of a spot.

3. Polarity-reversal protection means according to Claim 1,
**characterized**
**in that** the first contact point (21) is arranged on the circular ring-like contact area (14) in the form of a line.

4. Polarity-reversal protection means according to Claim 1,
**characterized**
**in that** the first contact point (21) is arranged on the circular ring-like contact area (14) over a surface area.

5. Polarity-reversal protection means according to one of the preceding claims,
**characterized**
**in that** the second contact point (22) is arranged on the circular disc-like contact area (15) in the form of a spot.

6. Polarity-reversal protection means according to one of Claims 1 to 4,
**characterized**
**in that** the second contact point (22) is arranged on the circular disc-like contact area (15) in the form of a line.

7. Polarity-reversal protection means according to one of Claims 1 to 4,
**characterized**
**in that** the second contact point (22) is arranged on the circular disc-like contact area (15) over a surface area.

## Revendications

1. Protection contre les inversions de polarité pour des appareils et des ressources électriques qui sont alimentés en énergie à partir de piles rondes (10) cylindriques remplaçables, la pile ronde (10) se composant d'un boîtier (11) en forme de godet, à symétrie de rotation et sensiblement cylindrique, lequel est configuré en tant que première électrode (12), et étant équipée d'une deuxième électrode (13) centrale qui s'étend le long de l'axe de symétrie du boîtier (11) en forme de godet, et comprenant des moyens d'accueil (20) pour la pile ronde avec un premier point de contact (21) pour la première électrode (12) de la pile ronde (10) et un deuxième point de contact (22) pour la deuxième électrode (13) de la pile ronde (10),
**caractérisée en ce**
- **que** le premier point de contact (21) est disposé sur une surface de contact (14) en forme de tore de la première électrode (12),
- **que** le deuxième point de contact (22) est disposé sur une surface de contact (15) en forme de disque circulaire de la deuxième électrode (13),
- **que** la surface de contact (14) en forme de tore et la surface de contact (15) en forme de disque circulaire sont disposées de manière coaxiale l'une par rapport à l'autre espacées le long de l'axe de symétrie du boîtier (11) en forme de godet et
- **que** le premier point de contact (21) et le deuxième point de contact (22) sont disposés du même côté de la pile ronde (10).

2. Protection contre les inversions de polarité selon la revendication 1, **caractérisée en ce que** le premier point de contact (21) est disposé en forme de point sur la surface de contact (14) en forme de tore.

3. Protection contre les inversions de polarité selon la revendication 1, **caractérisée en ce que** le premier point de contact (21) est disposé en forme de ligne sur la surface de contact (14) en forme de tore.

4. Protection contre les inversions de polarité selon la revendication 1, **caractérisée en ce que** le premier point de contact (21) est disposé en forme de surface sur la surface de contact (14) en forme de tore.

5. Protection contre les inversions de polarité selon l'une des revendications précédentes, **caractérisée en ce que** le deuxième point de contact (22) est disposé en forme de point sur la surface de contact (15) en forme de disque circulaire.

6. Protection contre les inversions de polarité selon l'une des revendications 1 à 4, **caractérisée en ce que** le deuxième point de contact (22) est disposé en forme de ligne sur la surface de contact (15) en forme de disque circulaire.

7. Protection contre les inversions de polarité selon l'une des revendications 1 à 4, **caractérisée en ce que** le deuxième point de contact (22) est disposé en forme de surface sur la surface de contact (15) en forme de disque circulaire.
